# EUROPEAN PATENT SPECIFICATION

(11) **EP 2 357 075 B1**
(45) Date of publication and mention of the grant of the patent: **08.07.2015**
(21) Application number: 09823120.2
(22) Date of filing: 28.10.2009
(51) Int. Cl.: B29C 70/46, B29C 70/34, B32B 3/02, B32B 3/10, B32B 3/30

(54) **METHOD FOR MANUFACTURING A COMPLEX-GEOMETRY PANEL WITH PRE-IMPREGNATED COMPOSITE MATERIAL**
VERFAHREN ZUR HERSTELLUNG EINER PLATTE MIT KOMPLEXER GEOMETRIE AUS VORIMPRÄGNIERTEM VERBUNDWERKSTOFF
PROCÉDÉ DE FABRICATION D'UN PANNEAU À GÉOMÉTRIE COMPLEXE EN MATÉRIAU COMPOSITE PRÉIMPRÉGNÉ

(30) Priority: 30.10.2008 ES 200803085
(43) Date of publication of application: 17.08.2011
(73) Proprietor: Airbus Operations S.L., 28906 Madrid (ES)
(72) Inventor: SÁNCHEZ-BRUNETE ÁLVAREZ, Desiderio, E-28028 Madrid (ES)
(74) Representative: ABG Patentes, S.L.
(86) International application number: PCT/ES2009/070466
(87) International publication number: WO 2010/049566

(56) References cited:
- EP-A1- 1 547 756
- DE-A1-102008 008 386
- JP-A- 60 224 530
- JP-A- 61 043 540
- JP-A- 2008 273 176
- US-A- 5 747 179
- US-A- 6 027 786
- US-A1- 2002 189 195
- US-A1- 2002 189 195
- US-A1- 2003 178 738
- US-A1- 2007 196 635
- US-A1- 2009 166 921
- US-B1- 6 454 893
- US-B1- 6 454 893
- US-B1- 6 692 681

## Description

### OBJECT OF THE INVENTION

The general objective problem that this invention relates to is to provide a manufacturing method of structural panels with relief geometry and low weight, ensuring that the panels obtained have: maximum mechanical and structural integrity and maximum precision in terms of dimensional tolerance,

In the present invention, "panel" is understood to be a piece of very small thickness in comparison with the surface over which It extends, or characteristic surface, this characteristic surface being able to have an open or closed contour (e,g., cylinders or cones are regarded as closed contour surfaces).

The low weight of the obtained panel as well as its required structural functionality directs the application of the invention towards panels manufactured in prepreg composite materials.

Prepreg material essentially consists of a set of reinforcing fibers impregnated in a resin matrix and grouped into layers being continuously spread along each layer, either unidirectionally or in the manner of a fabric (weft and warp). Conventionally, the prepreg is processed spreading the layers, and stacking them on a mold having a substantially flat surface; the array of stacked layers of prepreg spread over the mold is known as the stack. Once the stack has been spread in the mold, the mold is compacted, usually by means of the vacuum technique. It is then proceeded to be cured in an oven or autoclave by the application of a curing cycle in which the stack is subjected to a suitable temperature and pressure, and once the curing cycle is completed the resulting piece or panel is separated from the mold. The prepreg can consist of sheets, tapes or bands, giving rise to different known processes of obtaining panels in prepreg composite material respectively referred to as: laminating, tape lay-up or fiber placement. Laminating can consist of a fabric with a wide range of dimensional characteristics; the tapes or bands are normally supplied with the fibers spread unidirectionally with a width of between a few millimeters and several centimeters. Prepreg is widely used in the art for its good mechanical behavior as a result of the rigidity provided by the fibers since they are continuously dispersed along each layer. Furthermore, it is possible to obtain panels with a good surface finish and good dimensional tolerance, properties that are inherited from the surface accuracy with which it is possible to machine the mold on which the stack is spread.

Moreover, the invention relates to panels of the type known as "complex geometry", unlike manufacturing processes for conventional prepreg composite materials mentioned above. In general, complex geometry panels are understood in the present invention as being those panels which have a characteristic surface relief of complex geometry, being surfaces which, without necessarily being substantially smooth, are not substantially flat. In particular, panels that follow surfaces with reliefs such as undulations, grooves or funnels are considered to be complex geometry panels.

The reason for the panels having a complex geometry is that, with the incorporation of particular reliefs in said panels, such as undulations or grooves, the desirable technical effect can be achieved of optimizing the structural or mechanical behavior of a flat panel, for example eliminating the warping or in general increasing the resistance to stresses in the direction normal to the surface of the panel, thereby making up for the need to incorporate into the flat panel other reinforcing elements not involved in the panel such as stringers or stiffeners, which is the solution that predominates nowadays. This solution of incorporating auxiliary reinforcing elements into a flat panel has the major drawback that its installation is complicated, owing to the large amount of auxiliary pieces that it requires such as rivets or other attachment elements, fastenings, as well as having an adverse effect on the weight of structure Therefore, with the integration of said reliefs in the actual structure constituting the complex geometry panel, the technical advantages of reducing the manufacturing time of the structural panel, reducing its cost and reducing the weight of the structure, Improving the mechanical and structural behavior of the panel are achieved.

The solution provided by the present invention is based on the conventional processing of prepreg composite material which, as has been defined earlier, is carried out on sufficiently flat mold surfaces. In particular, the invention is conceived for the technique in which the prepreg is processed automatically, via a head which sweeps the surface of the mold spreading the material. This is the case of processes known in the art as automatic tape lay-up or fiber placement. The automatic processing of prepreg provides the additional advantages, compared to manual processing, of improving the production chain and lowering costs, due to reducing the manufacturing time and reducing the waste material, along with providing a greater precision, due to the uniformity of the pressures In the spreading of the prepreg and the compaction of the stack.

One possible technical solution to the problem of obtaining complex geometry panels in a prepreg composite panel would consist of spreading the prepreg in a mold that incorporates reliefs (male or female) in its surface, in such a way that the prepreg is spread over the entire surface including the faces of the surface of the reliefs, and giving rise to a stack that would have the same final shape as the panel. Nevertheless, said solution is currently not feasible in the state of the art for the automatic processing of prepreg since, in order to be able to automatically spread the prepreg over the surface of the mold, the surface needs to be sufficiently flat.

Bearing in mind that it is desirable to obtain the advantages provided by the conventional automatic process for prepreg in the current art, the present invention provides a technical solution for obtaining a panel of prepreg composite material of complex geometry in which said conventional automatic process for prepreg is applicable without limitation.

In order to achieve the solution that is advocated, the invention is based on the application of conventional hot forming and pressing techniques, in such a way that the reliefs, grooves, undulations, funnels, of the complex geometry panel can be shaped, starting from a flat stack of prepreg, once arranged on the mold, and with the use of a mold that has the appropriate shape matching the negative of the surface of the respective complex geometry panel to be obtained.

### FIELD OF THE INVENTION

The present invention is conceived for its application in the aeronautical and aerospace industry in which the weight of the structural pieces is a key factor.

Specifically, the present invention Is considered to be suitable for its application to the manufacture of large size structural panels and panels with closed contours, such as cylinders or cones, for example fuselage sections of aircrafts of the Wide Body type.

The use of the present invention Is not discarded in other industries where its application might be of interest on account of the weight of the structural pieces to obtain or because of other technical advantages, as an expert in the subject would be able to deduce from the description that is made in this specification.

### BACKGROUND OF THE INVENTION

Manufacturing processes for structural pieces in composite material by means of the technique known as "compression molding" are currently known in the field of the invention. This technique consists of preparing a mass of reinforcing fibers previously cut and impregnated in resin and then introducing that mass, which is known as the pre-form, Into a mold which is subjected to a high pressure compression. The different methods existing for obtaining the pre-form give rise to the different types of compression molding process known in the art, which are:
- When the pre-form is obtained from the mixture of impregnated cut fibers.
- When the pre-form is obtained from the mixture of the cut fiber and the resin separately in a mixture (Bulk Molding Compound, BMC).
- When the pre-form is obtained from the cut fiber deposited between two resin sheets (Sheet Molding Compound, SMC).

Patent document US 5609805 contains an embodiment of the compression molding technique referred to above.

In compression molding processes, the essential characteristic that makes it possible to produce the necessary deformation of the mold until the pre-form acquires the final shape of the piece, determined by the interior contour of the mold, is the rigidity of the material of the pre-form, which is sufficiently small, aided primarily by the elasticity of the resin and by the fact that the fibers are arranged mixed-up and cut in its interior and do not force the deformation of the pre-form, since they can be displaced relative to each other without opposition in the interior of the resin during the molding.

Moreover, manufacturing processes of pieces of prepreg composite material by means of thermoforming or hot forming and pressing are known. These processes can, like the present invention, be applied to prepregs. In these processes a pre-form of a prepreg composite material is shaped directly by means of the application of heat and a certain pressure that provokes the deformation of the material against a mold that has the shape of the negative of the surface to obtain.

Patent document US 4786343 contains some structural reinforcement pieces (stringers) which are manufactured by the thermoforming and pressing technique.

Unlike compression molding processes, the essential characteristic of thermoforming and pressing processes, which makes it possible to produce the necessary deformation of the mold until the pre-form of the prepreg acquires the final shape of the piece, is that the pre-form of the prepreg is spread over a sufficiently small area and that the contour of the pre-form is open or free of the application of trapping pressure during the pressing of the pre-form. But said method does not permit its application to prepregs whose size is sufficiently large and/or in which the pre-form remains trapped by an exterior contour. Equally, this method would not be applicable to panels of closed contour such as cylindrical or conical panels. The reason for these limitations is due to the following two factors: to the actual rigidity of the prepreg material in the direction of the fibers, which would prevent the deformation of the material in that direction until the breakage limit is reached if the entire contour of the pre-form were to be closed or trapped; and to the relative adherence existing between the prepreg and the surface of the mold, and also between the different layers of the prepreg which, due to depending on the area over which the prepreg is spread, for sufficiently large areas the correct shaping of the pre-form would be prevented by friction. On account of the above factors, the application of the conventional thermoforming and pressing technique directly to complex geometry panels turns out not to be satisfactory. Moreover, even if the pre-form were to be of sufficiently small size and had an open contour it would still not be possible to use this conventional technique to obtain certain pieces with sufficiently complex shapes, or complex geometry panels, with precision in terms of dimensional tolerance, because the appearance of creases and folds derived from the effect of distorting the layers of the prepreg and of the fibers during the forming would be unavoidable. These defects in the dimensional tolerance can lead to other derived defects to the detriment of the mechanical and structural integrity of the piece to be obtained such as for example vulnerability to the delamination of the prepreg, due to the increase in the probability of the appearance of cavities and stress concentration points as a consequence.

Document US2002189195A discloses a method for manufacturing a composite fiber component by disposing a fiber semi-finished product on a base part and curing them together to form an only composite fiber component.

Document EP1547756A1 relates to a method for manufacturing composite material aircraft component, such as C-shaped spars, stringers, and other like components, providing fibre material of two types and a resin material.

Document US5747179A discloses a pack for enclosing an organic matrix composite prepreg in an induction heating operation to cure or to consolidate the prepreg, the pack having three metal sheets.

Document US2002189195A discloses a method for fabricating a structural panel comprising the step of forming a series of undulations in each layer of the panel such that the undulations have a period that is greater than a length of the fibers in the composite material sheets.

Document US2011024562A a method for manufacturing a fibre-composite component with at least one structural component and a skin section connected to said structural component with a recess, wherein the structural component is situated and designed in such a manner that the structural component extends along at least one section of the recess, and where in the prepreg semifinished product fibres extend in some sections in a curved manner according to an assumed flow force path in the cladding field of the component to be manufactured.

### DESCRIPTION OF THE INVENTION

As will be described below, the characteristics of the present Invention determine that the advocated method , unlike the known art, is applicable on an unlimited basis to obtaining panels in prepreg composite material of sufficiently large size and to obtaining complex geometry panels, that is panels having reliefs of more complex shapes than those that can be obtained with the current art. Additionally, the method permits manufacture by means of the automatic pre-impregnating process, using techniques known as "fiber placement" and "automatic tape lay-up", permitting a high production chain and low cost and assuring that the panels obtained have maximum mechanical and structural integrity and maximum precision in terms of dimensional tolerance.

The method comprises the following stages: a first stage, known as "stacking", a second stage known as "forming", and a third stage known as "finishing".

In the first stage, the prepreg is spread over a mold giving rise to the stack. Unlike with the conventional mold, the mold to be used in the present invention presents some cavities corresponding to the negative of the complex geometry of the panel to be obtained. During this stage, said cavities can be partially or wholly occupied with a filling element in order to facilitate the application of the prepreg when necessary, in such a way that the filling element provides an auxiliary flat support surface that is flush with the surface of the mold for the placement of the different layers of the stack. Once the stack has been spread over the mold, the filling elements are withdrawn from the cavities of the mold, as appropriate.

Basically, the characteristic feature of the method of the present invention is that during this first stage of stacking, the prepreg is spread over the mold with at least one discontinuity or cut of the fibers of each layer. The discontinuity or cut of the fibers of each layer defines a line of discontinuity in the layers of prepreg, according to the end points of the discontinuities of the fibers. So, "section of prepreg layer" is defined as being the portion of the prepreg layer in which the fibers of the prepreg are spread continuously, in other words, without any discontinuity, as in each layer of the conventionally processed prepreg. A section of prepreg layer can be obtained by means of cutting a layer of prepreg along a line of discontinuity. In particular, when the spreading of the prepreg is done automatically, by automatic tape lay-up or by fiber placement, the sections of prepreg layers would be obtained directly by spreading the tapes or bands as far as the line of discontinuity, where the tape or band is automatically cut.

The second stage, of forming, consists of the application of hot forming and pressing techniques to the stack. To achieve this, during this phase a combined cycle of temperature and pressure, with or without vacuum, is applied to the stack until the stack acquires the shape of the final panel to be obtained. The existence of lines of discontinuity In the stack means that during this second stage of forming the stack can be locally deformed in the vecinity of the relief, since adjacent sections of layer of the prepreg of the stack are able to slide relative to each other, something that would otherwise be impossible in sufficiently large panels or panels with closed contours, on account of the action of the pressure and temperature, until the final shape is achieved of the complex geometry panel to be obtained.

Finally, the third stage, finishing, consists of performing conventional operations on the stack leading to the obtaining of the finished panel with its final physical constitution. This stage includes the curing of the prepreg resin by applying the appropriate cycle of pressure and temperature, the co-curing, the co-gluing of the panel with another piece or panel manufactured in composite material, also as appropriate, etc.

Co-gluing is understood to be the attachment of the cured complex geometry panel to a piece such as a flat panel using adhesive. Said attachment could be done with other conventional means such as riveting.

Co-curing is understood to be curing of the complex geometry panel together with a piece such as a flat panel manufactured in composite material.

For the embodiment of the present invention, certain technical aspects are to be considered that are explained below.

. A first technical aspect would be the distribution of the lines of discontinuity. This is a technical aspect to be determined depending on the shape of the reliefs of the complex geometry panel to be obtained and on the formability of the prepreg. The formability is defined as the ease of relative displacement between layers, and in general it depends on the adherence of the stack to the mold and on the adherence between the layers, which, in turn, depends on the viscosity of the prepreg resin, on the temperature and on the pressure applied during the forming, as well as on the thickness of the stack.

Bearing in mind the above, the line of discontinuity of each layer is distributed in the vecinity of the stack sufficiently close to the relief to be obtained, such that if the line of discontinuity were to be made outside of that vecinity, at a distance sufficiently far away from the reliefs, the adherence between the layers of the stack would, for the values of pressure and temperature determined In the process, prevent the relative displacement between the adjacent sections of layers of the stack and it would therefore not be possible to shape the material.

For these purposes, in relation to the manufacturing process that is advocated, said sufficiently close vecinity of the relief could technically be deduced by considering the state of tension of the stack subjected to forming stresses originating its deformation. In particular, and without limitation, an isostatic line bordering the relief to be obtained and in which the main tension owing to the application of the forming under its particular conditions were to be null, could be considered as a contour line of said sufficiently close vecinity. Likewise, the line of discontinuity of each layer could be defined along any of the isostatic lines parallel to said contour.

The above can be embodied directly to the case of reliefs "with a grooved shape", These reliefs are defined as those that are obtained starting from sections, in general with a different shape (polygonal or curved), projected according to a generatrix line. In particular, reliefs with a grooved shape would be those that are obtained from the projection of a section along a straight directrix line, which would define a directrix direction of the relief,

In the case of reliefs with a grooved shape and according to a straight generatrix direction, in accordance with that stated above on the distribution of the lines of discontinuity, these would be able to be defined according to the straight lines parallel to said straight generatrix.

A second technical aspect considered would be the orientation of the fibers of each section of layer of the stack. Typically, in a prepreg the fibers are arranged aligned along different directions according to each layer of the prepreg following a sequence and with a phase difference or relative inclination between the fibers of the different layers, for example, typical sequences of the fibers would be 0°, +60°, - 60°, or 0°, +45°, - 45°, 90°; In this way the panel is able to be given optimized properties according to the type and direction of the stresses to be withstood.

In relation to this technical aspect and for the specific case of reliefs with a grooved shape according to a straight generatrix direction, a stacking sequence is considered that is symmetric with respect to the generatrix direction of the relief. "Sequence that is symmetric with respect to the generatrix direction of the relief" Is understood to mean that provided the stack includes fibers orientated according to a certain direction, then the stack will also include symmetric fibers of the above fibers, in the adjacent layers, with respect to a direction perpendicular to the generatrix direction of the relief. So, for example, a stacking sequence of the layers with 0°, +45°, - 45°, 90° would be symmetric with respect to the generatrix direction of the relief if it were to be arranged with the different layers orientated forming 90°, -45°, 45°, 0°, respectively, with respect to the generatrix direction of the relief. The use of a symmetric sequence would favor the formability of the stack by avoiding distortion between layers or fibers.

A third technical aspect of the invention, also related to the orientation of the fibers of the stack, derives from a property of the stack consisting of the fact that the adherence between two adjacent layers of the stack during the forming is less when the phase difference existing between the direction of their respective fibers is less. In this way, this property can also be used In an embodiment of the invention for facilitating the formability of the material, as well as for allowing controlled grouped displacement of several sections of layer during the forming.

A fourth technical aspect would be the separation between the lines of discontinuity of the layers of the prepreg. In this regard, the options are considered of the layers being spread during the stacking both by leaving a certain distance between the lines of discontinuity and without leaving any distance between the sections of adjacent layers or even overlapping them. In this way, stacks could be obtained which, once formed, would have an overlap between adjacent sections of layers, and stacks could also be obtained that do not have any such overlapping. One or the other configuration could be of interest in practice for improving the mechanical behavior required in the panel to be obtained, particularly In that it permits the inertia of the reliefs obtained to be controlled. In relation to this technical aspect, "separation between the lines of discontinuity of the adjacent sections of layers" is defined as the distance existing between said lines of discontinuity, with a negative or positive sign according to whether the adjacent sections of layers are or are not overlapped, respectively.

Finally, with regard to the application of temperature and pressure, this can be done in an oven or in an autoclave according to the magnitude of the pressure required. The pressure can be applied by means of any system known in the art such as compaction rollers, presses with treads and male pieces, pressure atmospheres with fluids or gases. Both the pressure and the temperature influence the viscosity of the material, whose evolution is fundamental in the entire manufacturing process, bearing in mind that, as has been stated above, low values of viscosity favor the formability, as well as reflecting the state of curing of the prepreg resin.

### BRIEF DESCRIPTION OF THE FIGURES

In order to complement the description of the invention and with the aim of facilitating a better understanding of its characteristics, the present descriptive specification is accompanied by the following figures:
Figure 1a.- Represents an example of complex geometry panel.
Figure 1b.- Shows a detail of an example of relief with a grooved shape of a complex geometry panel.
Figure 1c.- Shows a detail of another example of relief (funnel) of a complex geometry panel.
Figure 2.- Represents the spreading of a band of prepreg on a mold by means of a head of a fiber placement machine.
Figure 3.- Shows an embodiment of a mold and represents the moment of the process in which the stack has been spread over the mold, prior to commencing the forming of the stack.
Figure 4.- Shows an embodiment of a mold and a press, and represents a moment of the process during the forming of the stack.
Figure 5.- Shows a perpective view of a mold for obtaining reliefs with a grooved shape and represents a distribution of the lines of discontinuity of the stack, along with an arrangement of the respective sections of layers of the stack with their respective sequence.
Figure 6a.- Shows a view of cross-section A-A' of the mold of fig. 5 and represents the stack of fig. 5 with its respective lines of discontinuity, prior to being formed.
Figure 6b.- Shows a view of cross-section A-A' of the mold of fig. 5 and represents the stack of fig. 5 with its respective lines of discontinuity, once it has been formed.
Figure 7.- Shows a perspective view of a mold for obtaining a relief with the shape of a crossing of reliefs with a grooved shape and represents a distribution of the lines of discontinuity of the stack.
Figure 8a.- Shows different examples of distribution of the lines of discontinuity of the different sections of layer of the stack, once the stack has been formed. These examples refer to stacks without overlapping between layers once formed.
Figure 8b.- Shows different examples of distribution of the lines of discontinuity of the different layers of the stack, once the stack has been formed. These examples refer to stacks with overlapping between sections of layers once formed.
Figure 9.- Represents different examples of shapes of mold for obtaining reliefs with a grooved shape.
Figure 10.- Represents a relief with a grooved shape in a finished panel
Figure 11a.- Represents the different stages of the method (I, II and III) applied to an embodiment in which there exists a single curing stage following the forming. The abscissa represents the time of the process and the ordinate represents the temperature (T), the viscosity (η) and the pressure (P).
Figure 11b.- Represents the different stages of the method (I, II and III) applied to an embodiment in which there exists a curing stage (III) comprising a second curing cycle (usually known as post-curing). The abscissa represents the time of the process and the ordinate represents the temperature (T), the viscosity (η) and the pressure (P).

### References:

I: First stage of stacking.
II: Second stage of forming.
III: Third stage of finishing.
1: panel.
2: Flat zone.
3: Relief.
4: Contour.
5: Head of a fiber placement machine.
6: Collimator.
7: Guide roller.
8: Cutter.
9: Compactor roller.
10: Band of prepreg.
11: Stack of prepreg.
12: Line of discontinuity.
13: Mold.
14: Filling piece.
15: Female piece.
16: Means of coupling of the female piece.
17: Press.
18: Tread.
19: Shaping male piece.
20: Rod.
21: Spring.
22: Vacuum valve.
23: Connector.
24: Runner.
25: Vacuum intake.
26: First layer or group of layers of stack.
27: Second layer or group of layers of stack.
28: Third layer or group of layers of stack.
29: Fourth layer or group of layers of stack.
30: Finished panel with a grooved shape relief.
31: Part of the finished panel consisting of a portion of co-glued or co-cured flat panel.

### DESCRIPTION OF A PREFERRED FORM OF EMBODIMENT

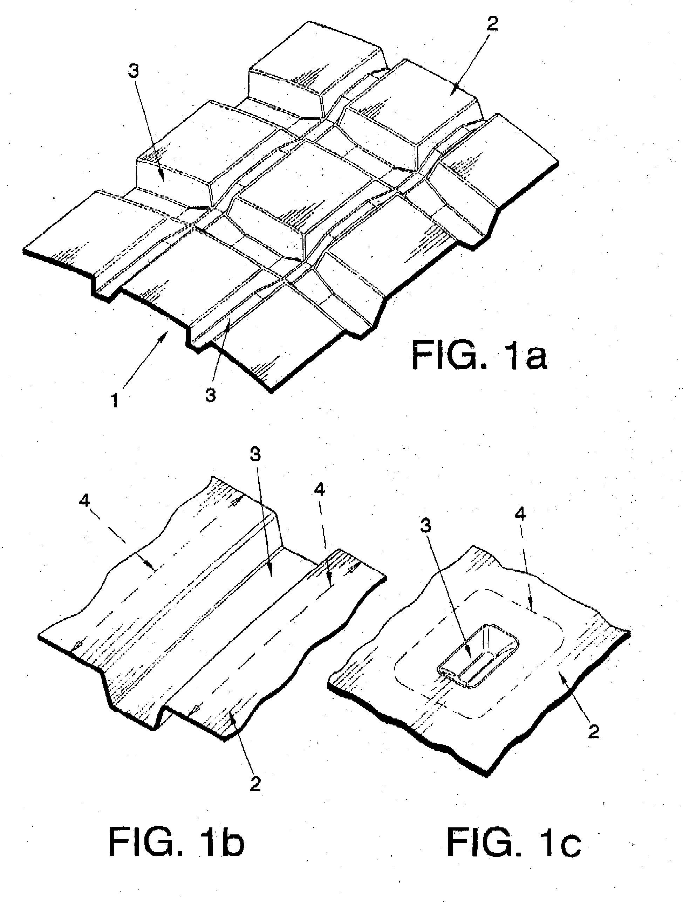

Figures 1a, 1b and 1c show a panel (1) with relief geometry (3) to which the present invention refers. The panel (1) with relief geometry (3) comprises some geometry reliefs (3), such as grooves (Fig. 1b) or funnels (Fig. 1c), with or without flat zones (2). Generically represented in said figures 1a and 1b is a contour (4) of a vecinity sufficiently close to the relief (3) of the panel (1) with relief geometry (3) to be obtained within which lines of discontinuity (12) of the stack (11) would be located.

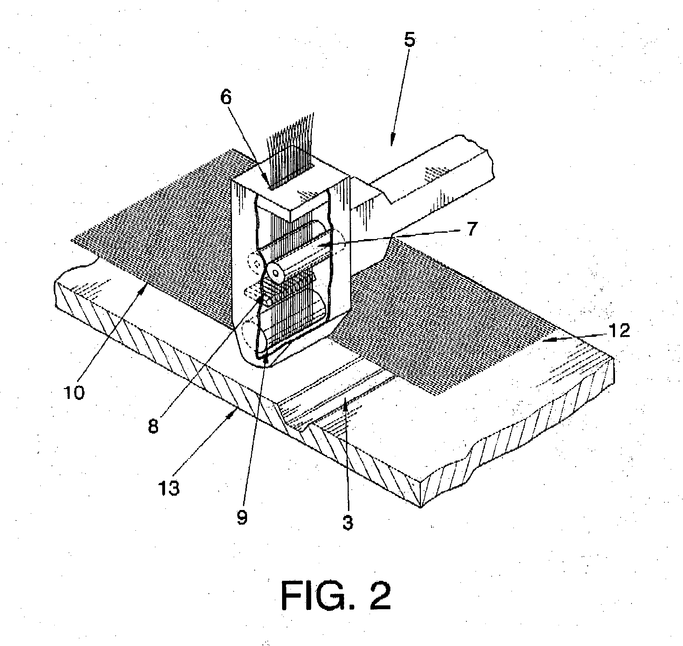

In figure 2 it can be seen how, in a preferred embodiment, the spreading of the prepreg over the mold (13) during a first stage of stacking (I) is carried out by means of the fiber placement technique. Figure 2 shows a head (5) of a fiber placement machine during the spreading of the prepreg. The head (5) in a simplified way consists of a collimator (6), which groups together the prepreg fibers into a band, some guide rollers (7), a cutter (8) and a compactor roller (9). No other auxiliary elements, such as voltage control means, thermocouples, etc., have been represented. The head sweeps the surface of the mold (13) spreading each section of layer of prepreg, band to band (10), up to a line of discontinuity (12), located in the vecinity of the stack sufficiently close to the corresponding relief (3), where the band is cut by the cutter (8). The different sections of layers are successively spread continuously between/up to or from the corresponding lines of discontinuity, thereby giving rise to the stack (11).

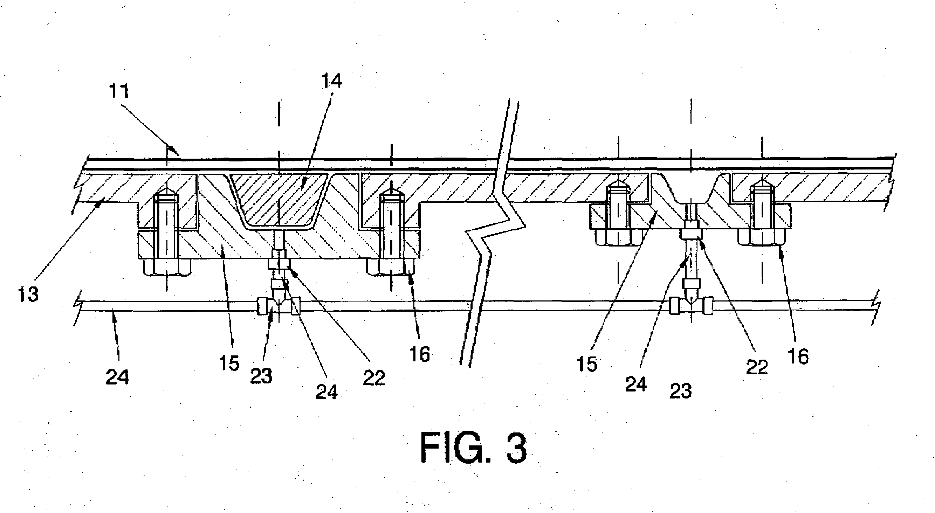

Figure 3 represents the stack (11) once it has been spread over the mold (13). The mold (13) consists of some female pieces (15) that include a cavity with the shape of the negative of the relief of the panel (1) with relief geometry (3) to be obtained. A filling element (14) can be housed in said cavity in order to facilitate the stacking (I). The female pieces (15) present some conventional means of coupling (16) to the mold. In figure 3, an embodiment of an installation for the application of vacuum pressure can also be seen, with valves (22), connectors (23) and runners (24).

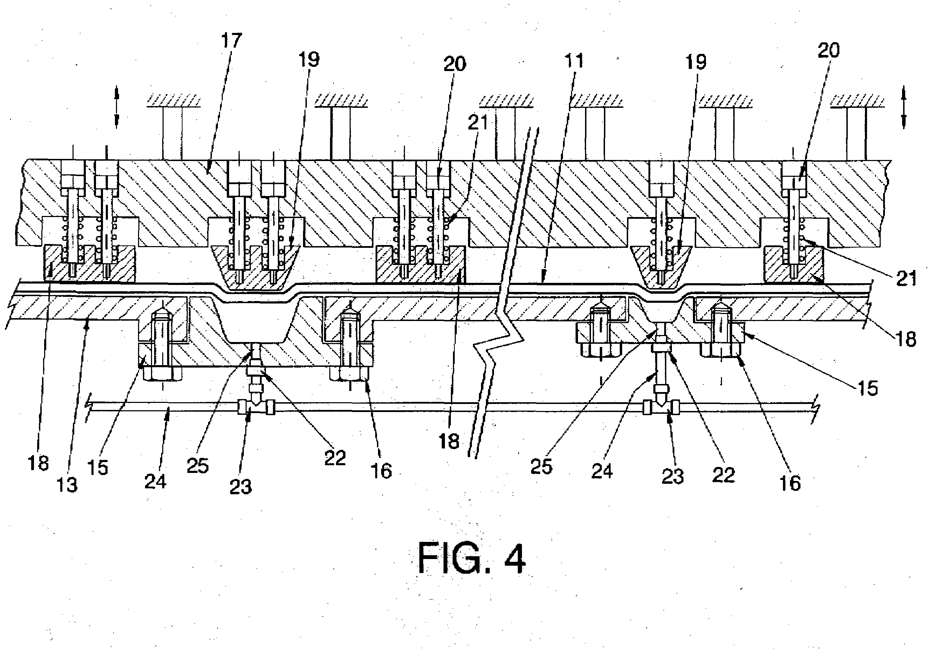

During second stage of forming (II), the stack (11) of prepreg is deformed by the application of pressure and temperature until it acquires the final shape. The forming (II) is represented in figure 4. In the embodiment that is shown in this figure 4, the application of pressure is effected by means of a press (17) which comprises conventional pressing elements such as a tread (18) or a forming male piece (19). For the correct application of the required forming pressure, said pressing elements incorporate some rods (20) which slide subjected to the reaction of a spring (21)

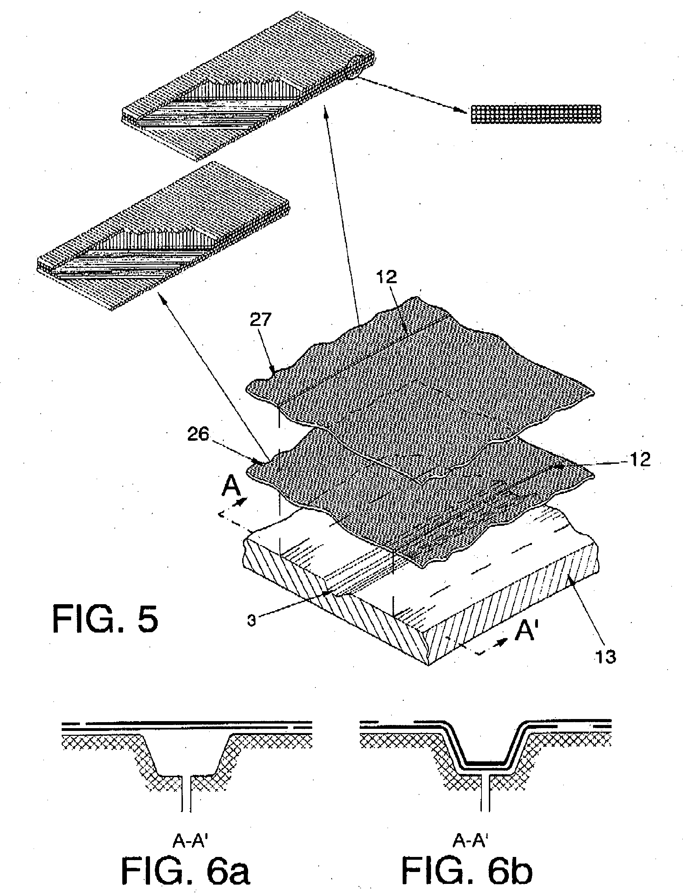

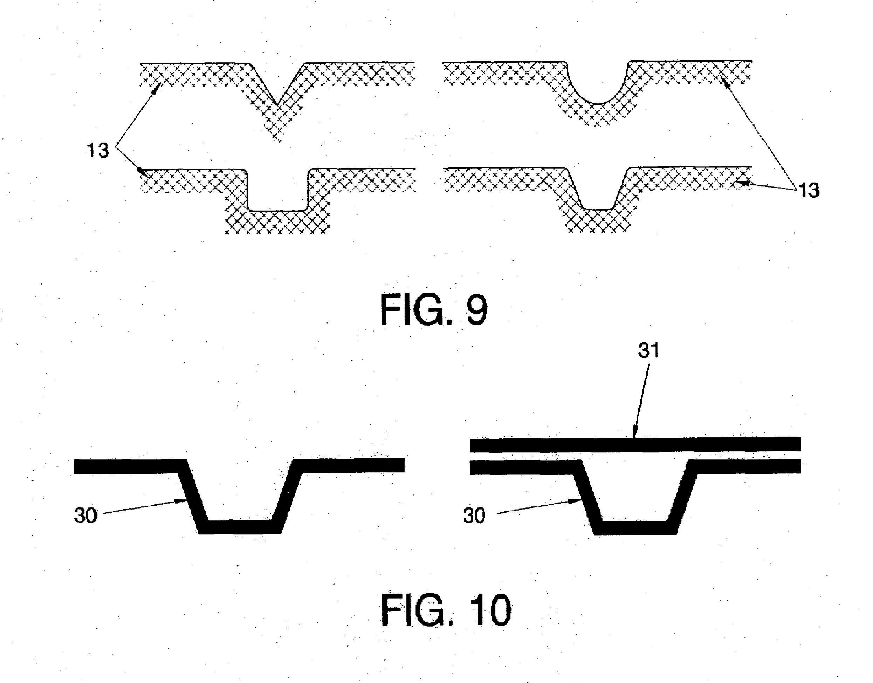

. In the application of the method of the invention for obtaining reliefs with a grooved shape (30), the cavities of the mold (13) can have different shapes, such as shown in figure 9. Figures 5. 6a and 6b represent the embodiment of the method of the invention applied to panels with grooved shape reliefs (30). Thus, figure 5 shows a stack of eight layers, grouped into two groups (26) and (27) of four layers each. In the embodiment shown in this figure, the lines of discontinuity (12) coincide for the sections of layer of the same group, in such a way that in total there are two lines of discontinuity in the stack, which are parallel to the generatrix direction of the relief with a grooved shape, as can be seen in the figure. Moreover, in the preferred embodiment, shown in this figure 5, the sequence of the stack is symmetric, as represented in the detailed views of the figure, It can also be seen how each one of the two groups (26) and (27) into which the layers are grouped in the embodiment shown is packaged between two layers with the fibers orientated according to the direction perpendicular to the generatrix direction of the relief with the grooved shape.

Figure 6a represents the stacking of the two groups of layers (26) and (27) in a view along the cross-section A-A' of figure 5, where the distribution can be seen of the lines of discontinuity (12) at the moment of finishing the stacking phase. Figure 6b represents the stack after the forming.

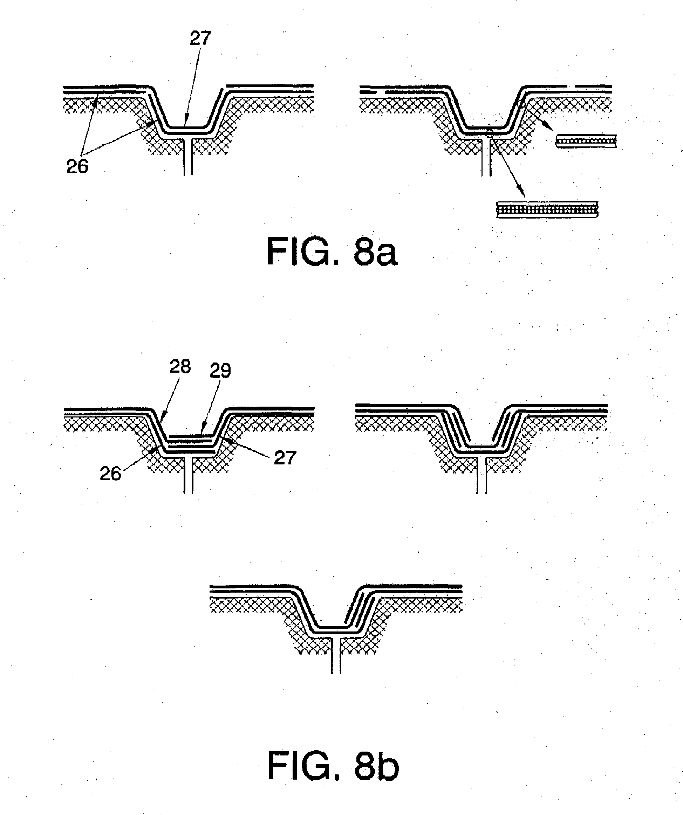

As can be seen, in the embodiment shown in figures 5, 6a and 6b, the distribution of the lines of discontinuity (12) is such that after the forming (II) the stack (11) does not have any adjacent layers overlapping, instead the discontinuity presents a separation with a positive sign. In other embodiments, as can be seen In figures 8a and 8b, the lines of discontinuity (12) could be such that following the forming the separation between the lines of discontinuity (12) of the different sections of layer is reduced to the minimum (fig. 8a) or even that the adjacent layers or groups of layers overlap each other (separation with negative sign) (fig. 8b).

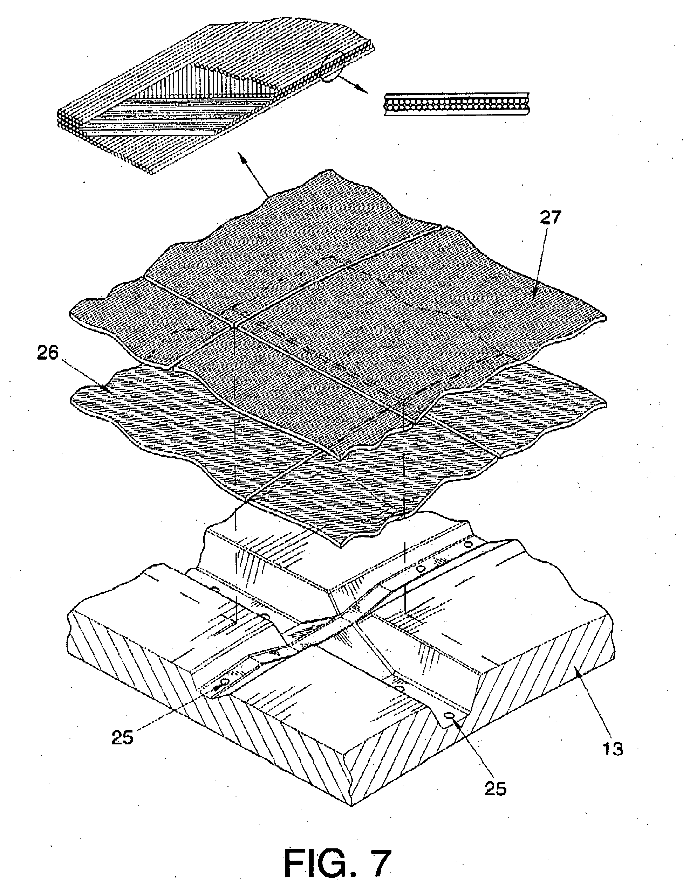

Analogously to figure 5, figure 7 represents the application of the method for obtaining a relief with the form of a crossing of reliefs with a grooved shape.

Once the forming (II) has been carried out, the remaining operations are performed on the stack until the finished panel is obtained (figure 10), the stage known as finishing (III). As well as finishing the curing cycle, in said third stage of finishing phase (III) the finished panel can undergo for example a colouring (with a second curing cycle, usually known as post-curing) or a co-gluing with a flat panel (31).

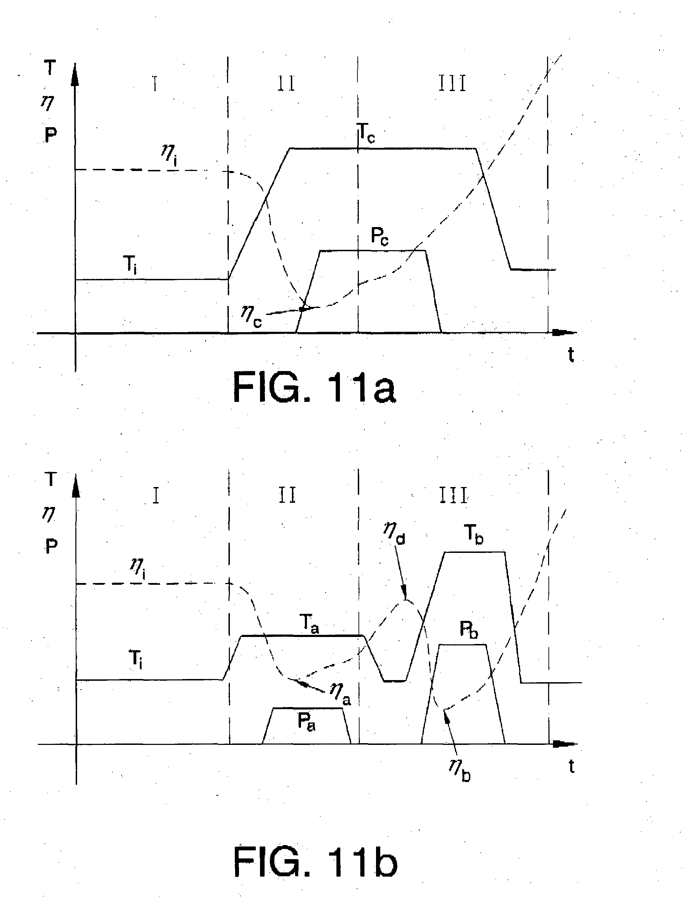

Finally, the graphics of figures 11 a and 11b represent two generic cycles of temperature (T) and pressure (P) applied to the embodiment of the present invention. The different stages of stacking (I), forming (II) and finishing (III) can be seen according to the temperature and pressure applied in each phase as a function of time, and representing the hypothetical variation in the viscosity (η) of the resin.

In relation to the graphics of figures 11a and 11b, some typical values for the embodiment of the respective cycles of pressure (P) and temperature (T) of the represented method could, without being limiting, be: Ti = ambient temperature; Pa = 5 bar, Pb = Pc = 10 bar; Ta = 100 °C; Tb = Tc = 200 °C.

## Claims

1. A method of manufacturing a prepreg composite panel with relief geometry, the prepreg comprising at least one layer consisting of reinforcing fibers that are spread continuously along the layer and a resin that impregnates said fibers; the method comprising the following stages:
- a first stage, of stacking (I), which comprises the spreading of sections of layers of prepreg until a stack of prepreg (11) is obtained, over a mold (13) having cavities with a shape defined by the corresponding geometry reliefs (3) of the panel (1) with the relief geometry (3) to be obtained;
- a second stage, of forming (II), which comprises the application of a cycle of temperature and pressure to the stack of prepeg (11) provided on the mold (13) until the stack (11) acquires a final shape with the geometry reliefs (3) of the panel (1) with the relief geometry (3) to be obtained; the pressure applied being selected from between either: a pressure against the stack (11) and the mold (13), or a vacuum between the stack (11) and the mold (13), and a combination of both thereof; and
- a third stage, of finishing (III), which comprises the application of a cycle of temperature and pressure to the stack (11) until the resin of the prepreg is cured;
**characterized in that**
- the stacking stage (1) comprises:
∘ continuous spread of sections of layers between/up to, or from the corresponding lines of discontinuity (12);
wherein the lines of discontinuity (12) are the points of the fibers of each layer through which layers are cut, and which are positioned within a contour (4) of the reliefs (3) allowing during the forming stage (II) local deformation of the stack (11) since adjacent sections of layer of the prepreg of the stack are able to slide relative to each other.

2. The method according to claim 1, wherein the stage of stacking (I) additionally comprises: filling at least one cavity of the mold (13) with a filling piece (14); and later on, once the stack (11) has been obtained, a stage selected from between either: withdrawing all the filling pieces (14), or withdrawing some of the filling pieces (14) from their corresponding cavities of the mold (13).

3. The method according to claim 2, wherein the lines of discontinuity (12) located within the contour (4) of each relief (3) are parallel to each other.

4. The method according to claim 3, wherein the separation between the lines of discontinuity (12) of adjacent sections of layers in the stage of stacking (I) is selected from between positive, negative and null.

5. The method according to claim 4, wherein the separation between the lines of discontinuity (12) of adjacent sections of layers existing at the end of the stage of forming (II) is selected from between positive, negative and null.

6. The method according to any one of claims 1 to 5, wherein the panel (1) with relief (3) comprises a relief (3) with a grooved shape.

7. The method according to claim 6, wherein at least one relief (3) with a grooved shape is defined by a straight generatrix direction.

8. The method according to claim 7, wherein the lines of discontinuity (12) of each section of layer of the stack (11), within the contour (4) of the relief (3) with a grooved shape, are parallel to the generatrix direction of the relief (3).

9. The method according to claim 8, wherein the different sections of layers of the stack (11) are spread, within the contour (4) of the relief (3), with a sequence that is symmetric with respect to the generatrix direction of the relief (3).

10. The method according to claims 1 to 5, wherein the stack (11), within the contour (4)of at least one relief (3), comprises a plurality of pairs of sections of layers in which the fibers are orientated following the same direction; including at least one section of layer of intermediate prepreg between two sections of layers of each pair, the fibers of each section of intermediate layer being orientated in a direction selected from between either: the same direction as that of the fibers of the pairs of sections of layers, or a different direction from that of the fibers in said pairs of sections of layers.

11. The method according to claim 9. wherein the stack (11), within the contour (4) of the relief (3), comprises a plurality of pairs of sections of layers in which the fibers are orientated following the same direction, this direction being perpendicular to the generatrix direction of the relief (3) with a grooved shape; including at least one section of layer of intermediate prepreg between two sections of layers of each pair, the fibers of each section of intermediate layer being orientated in a direction selected from between either: the same direction as that of the fibers of the pairs of sections of layers, or a different direction from that of the fibers in said pairs of sections of layers.

12. The method according to any one of claims 1 to 5, wherein the spreading of prepreg in the stacking (I) is done with an automatic means of prepreg spreading selected from between automatic tape lay-up and fiber placement; the stacking stage (I) of spreading each section of each layer of prepreg over the mold (13) comprising the following steps: spreading a first tape or band of prepreg (10) respectively, until a first position of the line of discontinuity (12), with a cut being made in that position of the tape or band (10) respectively; spreading a second tape or band (10) in the same layer, with a longitudinal edge of the first tape or band (10) making contact with a corresponding longitudinal edge of the second tape or band (10), until a second position of the line of discontinuity (12): and repeating the previous step up to completing the spreading of the entire section of layer.

13. The method according to any one of claims 1 to 5, wherein the finishing stage (III) further comprises the attachment of the cured panel (1) with relief geometry (3) to a piece by conventional means of attachment, selected from between either adhesive, rivets and a combination of adhesive and rivets.

14. The method according to claim 13, wherein the piece consists of a panel selected from between either a flat panel and a panel (1) with relief geometry (3).

15. The method according to any one of claims 1 to 5, wherein the finishing stage (III) comprises the attachment of the uncured panel (1) with relief geometry (3) to a piece manufactured in composite material, and afterwards carrying out the curing of the panel (1) with relief geometry (3) together with the piece.

16. The method according to claim 15, wherein the piece consists of a panel selected from between either a flat panel and a panel (1) with relief geometry (3).

## Patentansprüche

1. Verfahren zur Herstellung einer Prepreg-Verbundplatte mit Reliefgeometrie, wobei das Prepreg mindestens eine Schicht umfasst, bestehend aus Verstärkungsfasern, die kontinuierlich entlang der Schicht verteilt sind, und einem Harz, das die Fasern imprägniert; wobei das Verfahren die folgenden Stufen umfasst:
- eine erste Stufe des Stapelns (I), welche das Ausbreiten von Abschnitten von Prepreg-Schichten über eine Form (13) umfasst, bis ein Prepreg-Stapel (11) erhalten wird, wobei die Form (13) Aushöhlungen mit einer Gestalt aufweist, welche durch die entsprechenden geometrischen Reliefs (3) der Platte (1) mit der zu erhaltenden Reliefgeometrie (3) definiert ist;
- eine zweite Stufe des Formens (II), welche das Anwenden eines Zyklus von Temperatur und Druck bei dem auf der Form (13) vorgesehenen Prepreg-Stapel (11) umfasst, bis der Stapel (11) eine endgültige Form mit den geometrischen Reliefs (3) der Platte (1) mit der zu erhaltenden Reliefgeometrie (3) annimmt; wobei der aufgebrachte Druck ausgewählt ist aus entweder einem Druck gegen den Stapel (11) und die Form (13) oder einem Vakuum zwischen dem Stapel (11) und der Form (13) sowie einer Kombination aus beidem; und
- eine dritte Stufe der Endbearbeitung (III), welche das Anwenden eines Zyklus von Temperatur und Druck bei dem Stapel (11) umfasst, bis das Harz des Prepregs ausgehärtet ist;
**dadurch gekennzeichnet, dass**
- die Stapelstufe (I) Folgendes umfasst:
∘ das kontinuierliche Ausbreiten von Abschnitten von Schichten zwischen/bis zu oder von den entsprechenden Unterbrechungslinien (12);
wobei die Unterbrechungslinien (12) jene Stellen der Fasern jeder Schicht sind, durch die Schichten geschnitten werden und die innerhalb einer Kontur (4) der Reliefs (3) positioniert sind, wobei sie während der Stufe des Formens (II) eine örtliche Verformung des Stapels (11) ermöglichen, da benachbarte Abschnitte einer Prepreg-Schicht des Stapels relativ zueinander gleiten können.

2. Verfahren gemäß Anspruch 1, wobei die Stufe des Stapelns (I) zusätzlich Folgendes umfasst: das Füllen mindestens einer Aushöhlung der Form (13) mit einem Füllteil (14); und später, sobald der Stapel (11) erhalten wurde, eine Stufe, die ausgewählt ist aus entweder dem Herausziehen aller Füllteile (14) oder dem Herausziehen einiger der Füllteile (14) aus ihren entsprechenden Aushöhlungen in der Form (13).

3. Verfahren gemäß Anspruch 2, wobei die innerhalb der Kontur (4) jedes Reliefs (3) platzierten Unterbrechungslinien (12) parallel zueinander sind.

4. Verfahren gemäß Anspruch 3, wobei die Trennung zwischen den Unterbrechungslinien (12) von benachbarten Abschnitten von Schichten in der Stufe des Stapelns (I) aus positiv, negativ und null ausgewählt ist.

5. Verfahren gemäß Anspruch 4, wobei die Trennung zwischen den Unterbrechungslinien (12) von benachbarten Abschnitten von Schichten, die am Ende der Stufe des Formens (II) vorliegt, aus positiv, negativ und null ausgewählt ist.

6. Verfahren gemäß einem der Ansprüche 1 bis 5, wobei die Platte (1) mit Relief (3) ein Relief (3) mit einer gerillten Form aufweist.

7. Verfahren gemäß Anspruch 6, wobei mindestens ein Relief (3) mit einer gerillten Form durch eine gerade Generatrixrichtung definiert ist.

8. Verfahren gemäß Anspruch 7, wobei die Unterbrechungslinien (12) jedes Abschnitts einer Schicht des Stapels (11) innerhalb der Kontur (4) des Reliefs (3) mit einer gerillten Form parallel zur Generatrixrichtung des Reliefs (3) sind.

9. Verfahren gemäß Anspruch 8, wobei die verschiedenen Abschnitte von Schichten des Stapels (11) innerhalb der Kontur (4) des Reliefs (3) mit einer Abfolge ausgebreitet werden, die symmetrisch bezüglich der Generatrixrichtung des Reliefs (3) ist.

10. Verfahren gemäß den Ansprüchen 1 bis 5, wobei der Stapel (11) innerhalb der Kontur (4) mindestens eines Reliefs (3) eine Mehrzahl von Paaren von Abschnitten von Schichten aufweist, in denen die Fasern der gleichen Richtung folgend ausgerichtet sind; einschließlich mindestens eines Abschnitts einer Schicht eines intermediären Prepregs zwischen zwei Abschnitten von Schichten jedes Paars, wobei die Fasern jedes Abschnitts einer Zwischenschicht in einer Richtung ausgerichtet sind, die ausgewählt ist aus entweder der gleichen Richtung wie jene der Fasern der Paare von Abschnitten von Schichten oder einer anderen Richtung als jene der Fasern in diesen Paaren von Abschnitten von Schichten.

11. Verfahren gemäß Anspruch 9, wobei der Stapel (11) innerhalb der Kontur (4) des Reliefs (3) eine Mehrzahl von Paaren von Abschnitten von Schichten aufweist, in denen die Fasern der gleichen Richtung folgend ausgerichtet sind, wobei diese Richtung zur Generatrixrichtung des Reliefs (3) mit einer gerillten Form lotrecht ist; einschließlich mindestens eines Abschnitts einer Schicht eines intermediären Prepregs zwischen zwei Abschnitten von Schichten jedes Paars, wobei die Fasern jedes Abschnitts einer Zwischenschicht in einer Richtung ausgerichtet sind, die ausgewählt ist aus entweder der gleichen Richtung wie jene der Fasern der Paare von Abschnitten von Schichten oder einer anderen Richtung als jene der Fasern in diesen Paaren von Abschnitten von Schichten.

12. Verfahren gemäß einem der Ansprüche 1 bis 5, wobei das Verteilen von Prepreg beim Stapeln (I) mit einem automatischen Mittel zum Verteilen von Prepreg durchgeführt wird, das ausgewählt ist aus automatischem Tapelegen und Fiber-Placement; wobei die Stapelstufe (I) des Verteilens jedes Abschnitts jeder Prepreg-Schicht über die Form (13) die folgenden Schritte umfasst: das Ausbreiten eines ersten Tapes bzw. Bands aus Prepreg (10) bis zu einer ersten Position der Unterbrechungslinie (12), wobei in dieser Position des Tapes bzw. Bands (10) ein Schnitt gemacht wird; das Ausbreiten eines zweiten Tapes oder Bands (10) in der gleichen Schicht, wobei ein Längsrand des ersten Tapes oder Bands (10) mit einem entsprechenden Längsrand des zweiten Tapes oder Bands (10) bis zu einer zweiten Position der Unterbrechungslinie (12) in Kontakt gerät; und das Wiederholen des vorhergehenden Schritts bis zur Beendigung des Ausbreitens des gesamten Abschnitts einer Schicht.

13. Verfahren gemäß einem der Ansprüche 1 bis 5, wobei die Endbearbeitungsstufe (III) weiters das Befestigen der ausgehärteten Platte (1) mit Reliefgeometrie (3) an einem Teil durch herkömmliche Befestigungsmittel, ausgewählt aus entweder Klebstoff, Nieten und einer Kombination aus Klebstoff und Nieten, umfasst.

14. Verfahren gemäß Anspruch 13, wobei das Teil aus einer Platte besteht, die ausgewählt ist aus entweder einer flachen Platte und einer Platte (1) mit Reliefgeometrie (3).

15. Verfahren gemäß einem der Ansprüche 1 bis 5, wobei die Endbearbeitungsstufe (III) das Befestigen der ungehärteten Platte (1) mit Reliefgeometrie (3) an einem aus Verbundmaterial gefertigten Teil und anschließend das Durchführen des Aushärtens der Platte (1) mit Reliefgeometrie (3) zusammen mit dem Teil umfasst.

16. Verfahren gemäß Anspruch 15, wobei das Teil aus einer Platte besteht, die ausgewählt ist aus entweder einer flachen Platte und einer Platte (1) mit Reliefgeometrie (3).

## Revendications

1. Procédé de fabrication d'un panneau composite préimprégné avec une géométrie en relief, le préimprégné comportant au moins une couche constituée de fibres de renfort qui sont étalées de manière continue le long de la couche et d'une résine qui imprègne lesdites fibres, le procédé comportant les étapes suivantes :
- une première étape d'empilement (I), qui comporte l'étalement de portions de couches préimprégnées jusqu'à ce qu'une pile de préimprégné (11) soit obtenue, sur un moule (13) ayant des empreintes avec une forme définie par les reliefs géométriques (3) du panneau (1) correspondant à la géométrie en relief (3) à obtenir,
- une deuxième étape de formage (II), qui comporte l'application d'un cycle de température et de pression à la pile de préimprégné (11) disposée sur le moule (13) jusqu'à ce que la pile (11) acquière une forme finale avec les reliefs géométriques (3) du panneau (1) avec le relief géométrique (3) à obtenir, la pression appliquée étant choisie entre soit une pression contre la pile (11) et le moule (13), soit un vide entre la pile (11) et le moule (13), soit une combinaison de ceux-ci, et
- une troisième étape de finition (III), qui comporte l'application d'un cycle de température et de pression à la pile (11) jusqu'à ce que la résine préimprégnée soit durcie,
**caractérisé en ce que**
- l'étape d'empilement (I) comporte :
∘ l'étalement continu de portions de couches entre/jusqu'à, ou depuis des lignes de discontinuité (12) correspondantes,
dans lequel les lignes de discontinuité (12) sont les points des fibres de chaque couche à travers lesquelles des couches sont découpées, et qui sont positionnées à l'intérieur d'un contour (4) des reliefs (3) permettant, pendant l'étape de formage (II), une déformation locale de la pile (11) car des portions adjacentes de couche du préimprégné de la pile peuvent glisser les unes par rapport aux autres.

2. Procédé selon la revendication 1, dans lequel l'étape d'empilement (I) comporte de plus le remplissage d'au moins une empreinte du moule (13) avec une pièce de remplissage (14), et ensuite, une fois que la pile (11) a été obtenue, une étape choisie entre soit retirer toutes les pièces de remplissage (14), soit retirer certaines des pièces de remplissage (14) de leurs empreintes correspondantes du moule (13).

3. Procédé selon la revendication 2, dans lequel les lignes de discontinuité (12) situées dans les limites du contour (4) de chaque relief (3) sont parallèles les unes aux autres.

4. Procédé selon la revendication 3, dans lequel la séparation entre les lignes de discontinuité (12) de portions adjacentes de couches à l'étape d'empilement (I) est choisie entre positive, négative et nulle.

5. Procédé selon la revendication 4, dans lequel la séparation entre les lignes de discontinuité (12) de portions adjacentes de couches existant à la fin de l'étape de formage (II) est choisie entre positive, négative et nulle.

6. Procédé selon l'une quelconque des revendications 1 à 5, dans lequel le panneau (1) avec le relief (3) comporte un relief (3) avec une forme rainurée.

7. Procédé selon la revendication 6, dans lequel au moins un relief (3) avec une forme rainurée est défini par une direction de génératrice rectiligne.

8. Procédé selon la revendication 7, dans lequel les lignes de discontinuité (12) de chaque portion de couche de la pile (11), dans les limites du contour (4) du relief (3) avec une forme rainurée, sont parallèles à la direction de génératrice du relief (3).

9. Procédé selon la revendication 8, dans lequel les différentes portions de couches de la pile (11) sont étalées, dans les limites du contour (4) du relief (3), avec une séquence qui est symétrique par rapport à la direction de génératrice du relief (3).

10. Procédé selon les revendications 1 à 5, dans lequel la pile (11), dans les limites du contour (4) d'au moins un relief (3), comporte une pluralité de paires de portions de couches dans lesquelles les fibres sont orientées suivant la même direction, incluant au moins une portion de couche préimprégnée intermédiaire entre deux portions de couches de chaque paire, les fibres de chaque portion de couche intermédiaire étant orientées dans une direction choisie entre soit la même direction que celle des fibres des paires de portions de couches, soit une direction différente de celle des fibres dans lesdites paires de portions de couches.

11. Procédé selon la revendication 9, dans lequel la pile (11), dans les limites du contour (4) du relief (3), comporte une pluralité de paires de portions de couches dans lesquelles les fibres sont orientées suivant la même direction, cette direction étant perpendiculaire à la direction de génératrice du relief (3) avec une forme rainurée, incluant au moins une portion de couche préimprégnée intermédiaire entre deux portions de couches de chaque paire, les fibres de chaque portion de couche intermédiaire étant orientées dans une direction choisie parmi soit la même direction que celle des fibres des paires de portions de couches, soit une direction différente de celle des fibres dans lesdites paires de portions de couches.

12. Procédé selon l'une quelconque des revendications 1 à 5, dans lequel l'étalement du préimprégné dans l'empilement (I) est réalisé avec des moyens automatiques d'étalement de préimprégné choisis entre une superposition automatique de rubans et un placement de fibres, l'étape d'empilement (I) de l'étalement de chaque portion de chaque couche préimprégnée sur le moule (13) comportant les étapes suivantes : l'étalement d'un premier ruban ou d'une première bande de préimprégné (10) respectivement, jusqu'à une première position de la ligne de discontinuité (12), une découpe étant réalisée dans cette position du ruban ou de la bande (10) respectivement, l'étalement d'un second ruban ou d'une seconde bande (10) dans la même couche, un bord longitudinal du premier ruban ou de la première bande (10) faisant contact avec un bord longitudinal correspondant du second ruban ou de la seconde bande (10), jusqu'à une seconde position de la ligne de discontinuité (12), et la répétition de l'étape précédente jusqu'à l'achèvement de l'étalement de la portion complète de couche.

13. Procédé selon l'une quelconque des revendications 1 à 5, dans lequel l'étape de finition (III) comporte en outre la fixation du panneau durci (1) avec une géométrie en relief (3) à une pièce, par des moyens de fixation habituels, choisis entre un adhésif, des rivets et une combinaison d'un adhésif et de rivets.

14. Procédé selon la revendication 13, dans lequel la pièce est constituée d'un panneau choisi entre soit un panneau plat, soit un panneau (1) avec une géométrie en relief (3).

15. Procédé selon l'une quelconque des revendications 1 à 5, dans lequel l'étape de finition (III) comporte la fixation du panneau non durci (3) avec une géométrie en relief (3) à une pièce fabriquée en matériau composite, et ensuite la réalisation du durcissement du panneau (1) avec une géométrie en relief (3) en association avec la pièce.

16. Procédé selon la revendication 15, dans lequel la pièce est constituée d'un panneau choisi entre soit un panneau plat, soit un panneau (1) avec une géométrie en relief (3).
